# EUROPÄISCHE PATENTANMELDUNG

(11) **EP 1 246 078 A2**
(43) Veröffentlichungstag der Anmeldung: **02.10.2002**
(21) Anmeldenummer: 02006122.2
(22) Anmeldetag: 18.03.2002
(51) Int. Cl.: G06F 17/30

(54) **Verfahren zur Erzeugung einer Darstellung für das Wiederfinden einer bereits aufgerufenen Informationsseite**

(30) Priorität: 30.03.2001 DE 10115895
(71) Anmelder: SIEMENS AKTIENGESELLSCHAFT, 80333 München (DE)
(72) Erfinder: Bengi, Alinejat, Dr., 91052 Erlangen (DE); Kuth, Rainer, 91074 Herzogenaurach (DE)

(57) **Zusammenfassung**

Die Erfindung betrifft ein Verfahren zur Erzeugung einer Darstellung (80, 81) für das Wiederfinden einer bereits von einer Startseite (50) eines Informationsanbieters aus aufgerufenen und inzwischen verlassenen Informationsseite, welche über das Internet, ein Intranet oder ein Extranet aufrufbar ist. Im Zuge des Verfahrens wird der Benutzer (5) bei Aufruf der Startseite (50) registriert. Des weiteren werden die von dem Benutzer (5) unmittelbar und mittelbar von der Startseite (50) aus aufgerufenen Informationsseiten des Informationsanbieters registriert und vorzugsweise aufsetzend auf die Startseite (50) wird eine anzeigbaren Darstellung (80, 81) erzeugt, aus der die Abfolge der von dem Benutzer (5) aufgerufenen Informationsseiten des Informationsanbieters erkennbar ist.

## Beschreibung

Die Erfindung betrifft ein Verfahren zur Erzeugung einer Darstellung für das Wiederfinden einer bereits von einer Startseite eines Informationsanbieters aus aufgerufenen und inzwischen verlassenen Informationsseite.

Beim sogenannten "Surfen", beispielsweise im Internet, worunter das zeitlich aufeinanderfolgende Aufrufen verschiedener Internetseiten über Hyperlinks verstanden wird, tritt häufig das Problem auf, dass man nach einiger Zeit eine bereits aufgerufene und inzwischen verlassene Internetseite wiederfinden, d.h. nochmals aufrufen möchte. Gängige Netzwerkbrowser, worunter auf Rechnern, beispielsweise PCs, lauffähige Computerprogramme verstanden werden, welche das Surfen im Internet ermöglichen, bieten zum Wiederfinden einer bereits aufgerufenen Internetseite nur beschränkte Möglichkeiten. Die meisten Netzwerkbrowser, beispielsweise der Internet-Explorer der Microsoft Corporation oder das Programm Netscape der Netscape Communications Corporation bieten einen sogenannten "Zurück"-Button an, um ausgehend von der aktuell aufgerufenen Internetseite zu der unmittelbar zuvor aufgerufenen Internetseite zu gelangen. Unter einer Internetseite wird dabei die unter einer Internetadresse mit Hilfe eines Netzwerkbrowsers abrufbare Information und zwar unabhängig vom Umfang der Information verstanden.

Des weiteren besteht die Möglichkeit, eine Adressliste aufzurufen, welche eine Anzahl von aufgerufenen Adressen von Internetseiten aufweist. Die Adressliste umfasst allerdings in der Regel keine Adressen von von einer Startseite bzw. Homepage aus mittels sogenannter Links aufgerufener Internetseiten. Hinter einem solchen Link, welcher beispielsweise durch einen Strich unter einem Wort gekennzeichnet ist, verbirgt sich dabei eine nicht explizit erkennbare Adresse einer Internetseite. Durch Aktivierung des Links mit einer Computermouse, wobei beispielsweise ein mit der Computermouse verstellbarer Zeiger auf den Link bewegt und durch Betätigen einer Taste der Computermouse aktiviert wird, gelangt man dabei in die entsprechende Internetseite.

Insbesondere nach längerem Surfen im Internet sind der "Zurück"-Button und die Adressliste daher nur bedingt geeignet, eine bereits aufgerufene Internetseite wiederzufinden, insbesondere wenn es sich um eine Internetseite aus dem Informationsangebot eines Informationsanbieters handelt, welche von einer Startseite abzweigt, da die Adresse der wiederzufindenden Internetseite aus den genannten Gründen entweder nicht oder nicht mehr in der Adressenliste zu finden ist, weil sie bereits gelöscht wurde. Gleiches gilt im Übrigen für das Surfen in einem Intranet oder Extranet mittels eines Browsers.

In der WO 00/75827 A1 ist ein Verfahren beschrieben, mit dem das Verhalten einer Person beim Surfen im Internet mit einem auf einem Rechner ausgeführten Internet-Browser analysiert werden kann. Immer wenn die Person mit dem Internet-Browser eine Internetseite von einem Internetserver anfordert, wird der Zustand des Internet-Browsers aufgezeichnet und Daten über aufgerufene Internetseiten erfasst.

Aus der EP 0 810 536 A1 ist ein Verfahren bekannt, bei dem der Benutzer eines Internet-Browsers vor der Anzeige einer mit dem Internet-Browser von einem Internetserver neu angeforderten Internetseite auf einer Anzeigevorrichtung entscheiden kann, ob ein zusätzliches Fenster zur Anzeige der neu angeforderten Internetseite geöffnet werden soll, damit eine bereits mit dem Internet-Browser angezeigte Seite weiterhin angezeigt wird und nicht von der neu angeforderten, anzuzeigenden Internetseite überblendet wird.

In der DE 199 60 043 A1 ist ein von einem Computersystem ausführbares Verfahren zum Navigieren innerhalb einer Baumstruktur mit Blattknoten beschrieben, die beliebige zusammengehörige, als Einheit behandelte Daten darstellen.

Der Erfindung liegt die Aufgabe zugrunde, ein Verfahren der eingangs genannten Art derart anzugeben, dass eine bereits aufgerufene und inzwischen verlassene Informationsseite aus dem Informationsangebot eines Informationsanbieters, welche von einer Startseite des Informationsanbieters aus unmittelbar oder mittelbar aufrufbar ist, in einfacher Weise wiedergefunden und somit nochmals aufgerufen werden kann.

Nach der Erfindung wird diese Aufgabe gelöst durch ein Verfahren zur Erzeugung einer Darstellung für das Wiederfinden einer bereits von einer Startseite eines Informationsanbieters aus aufgerufenen und inzwischen verlassenen Informationsseite, welche über das Internet, ein Intranet oder ein Extranet aufrufbar ist, aufweisend folgende Verfahrensschritte:
a) Registrieren eines Benutzers bei Aufruf der Startseite,
b) Registrieren der von dem Benutzer unmittelbar und mittelbar von der Startseite aus aufgerufenen Informationsseiten des Informationsanbieters, und
c) Erzeugung einer anzeigbaren Darstellung, aus der die Abfolge der von dem Benutzer aufgerufenen Informationsseiten des Informationsanbieters erkennbar ist.

Erfindungsgemäß ist es also vorgesehen, eine optional anzeigbare Darstellung zu erzeugen, welcher der Benutzer seinen Weg beim Surfen durch das Informationsangebot des Informationsanbieters, bzw. welcher der Benutzer insbesondere die von ihm von einer Startseite, welche beispielsweise die Homepage eines Informationsanbieters im Internet sein kann, unmittelbar und mittelbar aus aufgerufenen Informationsseiten des Informationsanbieters, entnehmen kann. Der Benutzer kann demnach in einfacher Weise eine bereits aus dem Informationsangebot des Informationsanbieters aufgerufene Informationsseite, sei es eine Internetseite, sei es eine Intranetseite oder sei es eine Extranetseite, die er schon verlassen hat und nochmals aufrufen möchte, identifizieren.

Nach einer besonders bevorzugten Ausführungsform der Erfindung setzt die Darstellung wenigstens im Wesentlichen auf Inhalte der Startseite auf, wobei in der Darstellung die Abfolge der aufgerufenen Informationsseiten grafisch gekennzeichnet ist. Dabei lässt sich nach einer Variante der Erfindung die Abfolge der von dem Benutzer aufgerufenen Informationsseiten besonders einfach identifizieren, wenn die Abfolge durch Pfeile gekennzeichnet ist.

Eine andere Variante der Erfindung sieht vor, dass die Abfolge der aufgerufenen Informationsseiten durch Zahlen gekennzeichnet ist. Auch auf diese Weise kann der Benutzer komfortabel die Abfolge seiner bereits aufgerufenen Informationsseiten identifizieren und zu einer gewünschten, bereits aufgerufenen Informationsseite zurück gelangen.

Eine weitere Variante der Erfindung sieht vor, dass die Darstellung nur temporär erzeugt wird und demnach nur für eine gewisse Zeit zur Verfügung steht, um bei der Vielzahl von Benutzern, welche die Startseite des Informationsanbieters aufrufen, den Speicheraufwand an Daten für den Service, das Wiederfinden einer bereits aufgerufenen Informationsseite zu erleichtern, zu reduzieren. Wie lang ein Informationsanbieter die einem bestimmten Benutzer zugehörige Darstellung für das Wiederfinden einer bereits aufgerufenen Informationsseite zur Verfügung stellt, ist dabei dem Informationsanbieter überlassen.

Nach einer Ausführungsform der Erfindung weist die Darstellung der bereits aufgerufenen Informationsseiten inhaltliche Beschreibungen der aufgerufenen Informationsseiten im Klartext auf, d.h. die Darstellung umfasst in der Hauptsache vorzugsweise Angaben über den Informationsinhalt der entsprechenden Informationsseiten. Die Darstellung ist also keine reine Wiedergabe von Adressen aufgerufener Informationsseiten, welche häufig keine für den Benutzer verwertbare Information bieten.

Gemäß einer weiteren Ausführungsform der Erfindung kann die Darstellung wenigstens zwei anzeigbare Ebenen umfassen, wobei die erste Ebene der Darstellung auf die Startseite aufsetzt und wobei die zweite Ebene der Darstellung auf eine von der Startseite aus aufrufbare, ebenfalls wenigstens eine aufrufbare Informationsseite bietende Verzweigungsseite aufsetzt, wobei in der ersten Ebene die Verzweigung in die zweite Ebene erkennbar ist. Diese Ausführungsform der Erfindung trägt der von einem Informationsanbieter zur Verfügung gestellten Informationsvielfalt Rechnung, wenn von der Startseite aus aufrufbare Verzweigungsseiten ebenfalls mehrere Alternativen von aufrufbaren Informationsseiten bieten. Auf diese Weise kann sich der Benutzer in einfacher Weise auch einen Überblick über die von ihm aufgerufenen von Verzweigungsseiten aus aufrufbaren Informationsseiten verschaffen, um in einfacher Weise eine von ihm aufgerufene Informationsseite, welcher er nochmals aufrufen möchte, wiederzufinden.

Ein Ausführungsbeispiel der Erfindung ist in den beigefügten schematischen Figuren dargestellt. Es zeigen:
- Fig. 1: eine Anordnung für die Kommunikation über das Internet,
- Fig. 2: eine auf einem Server zur Verfügung gestellte Homepage eines Informationsanbieters, und
- Fig. 3 und 4: eine erfindungsgemäße Darstellung mit zwei Ebenen, aus der die Abfolge von aufeinanderfolgend aufgerufenen Internetseiten eines Informationsanbieters erkennbar ist.

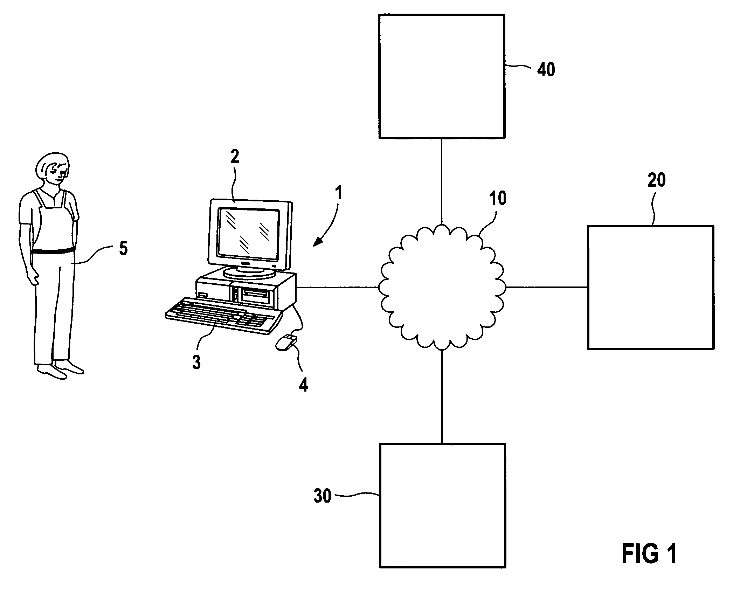

In der Fig. 1 ist exemplarisch eine Anordnung für eine Kommunikation über das Internet gezeigt. Mit Hilfe eines Rechners 1, welcher in an sich bekannter Weise eine Anzeigevorrichtung 2, eine Tastatur 3 und eine Computermouse 4 aufweist, und mit Hilfe eines geeigneten, auf dem Rechner 1 laufenden Computerprogramms, beispielsweise eines Browsers in Form des Internet-Explorers der Firma Microsoft Corporation oder des Programms Netscape der Netscape Communications Corporation kann ein den Rechner 1 nutzender Benutzer 5 über das schematisch angedeutete Internet 10 nach Eingabe der jeweils entsprechenden Internetadresse auf verschiedene, auf sogenannten Servern 20, 30, 40 zur Verfügung gestellte Informationenseiten in Form von Internetseiten zugreifen.

Das Internet ist ein weltweites dezentrales Netz, das einzelne regionale und lokale Netze in aller Welt untereinander verbindet. Das Internet ist durch eine einheitliche Adressierungsstruktur in Form der URL-Adressen (Uniform Resource Locator) gekennzeichnet. Dabei wird zur Datenübertragung im Internet hauptsächlich TCP/IP (Transport Control Protocol / Internet Protocol) verwendet. Das WWW (World Wide Web) ist dabei ein Hypertext-basierter Informationsdienst im Internet. Im WWW wird das HTTP (Hypertext Transfer Protocol) verwendet, mit dem Informationen als HTML-Dokumente (Hypertext Markup Language) übertragbar sind. Das WWW weist im Wesentlichen eine Klienten-Server-Struktur auf. Dies heißt, dass typische Funktionalitäten auf einem dialogartigen Informationsaustausch zwischen einem Klienten und wenigstens einem Server basieren. Dabei ist ein Server ein Rechner, der im Netz Informationen eines Informationsanbieters in Form von Datenbeständen, Programmen oder Diensten für Benutzer bereitstellt. Beispielsweise wird eine als HTML-Dokument gestaltete Web-Seite oder Homepage auf einem Server abgelegt, d.h. gespeichert, und kann dort von überall über das Netz aufgerufen werden. Als Klient wird innerhalb der Klienten-Server-Struktur derjenige Rechner bezeichnet, der von einem Benutzer verwendet wird, um Daten mit dem Server auszutauschen. Dazu bedient sich der Benutzer, wie bereits erwähnt, eines auf dem Klienten-Rechner ausführbaren Browsers. Dabei ist ein Browser ein Programm, mit dem von einem Server ein HTML-Dokument ladbar und am Klienten-Rechner darstellbar ist. Im einfachsten Fall wird ein formatierter Hypertext dargestellt, in Erweiterungen kommen unter anderem Graphiken, Soundeffekte und Applets hinzu, die entsprechend in das HTML-Dokument eingelagert sind. Dazu muss der Browser allerdings die Erweiterungen entsprechend unterstützen.

Beim Aufruf einer Internetadresse eines Informationsanbieters mit seinem Rechner 1 gelangt der Benutzer 5 in der Regel zunächst auf eine Startseite, beispielsweise auf eine Homepage, auf der bereits erste Informationen angeboten werden und von der aus weitere Informationen enthaltende Internetseiten aufgerufen werden können.

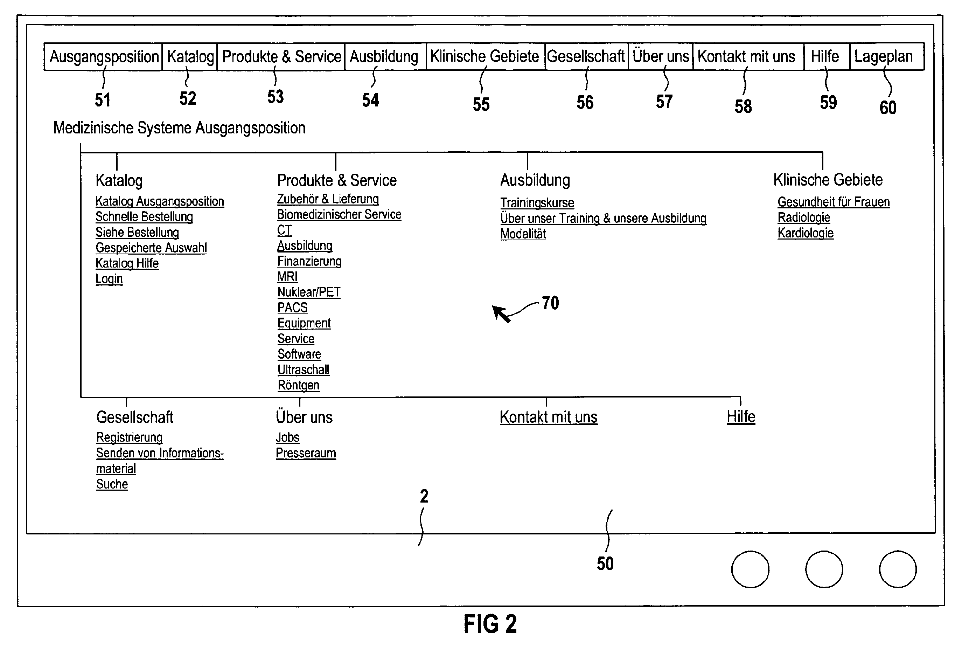

Im Falle des vorliegenden Ausführungsbeispiels hat der Benutzer 5 die in Fig. 2 dargestellte, auf dem Server 20 zur Verfügung gestellte Homepage 50 eines Informationsanbieters aufgerufen, von der aus weitere von dem Informationsanbieter eingerichtete Internetseiten über sogenannte Links aufgerufen werden können. Ein Link, hinter dem sich eine aufrufbare Internetseite verbirgt, ist im Falle des vorliegenden Ausführungsbeispiels an einem Strich unter einem Wort zu erkennen, das auf die auf dieser Internetseite vorhandene Information hinweist. Außerdem verbergen sich hinter den aktivierbaren Buttons 51 bis 59 Links zu Internetseiten des Informationsanbieters. Durch Aktivieren eines Links, beispielsweise indem der Benutzer 5 den in Fig. 2 schematisch angedeuteten Pfeil 70 mit der Computermouse 4 auf den entsprechenden Link bewegt und durch Betätigen einer nicht dargestellten Taste der Computermaus 4 aktiviert, gelangt der Benutzer 5 in die entsprechende Internetseite, auf der weitere Links zu anderen Internetseiten angeboten werden können.

Um erfindungsgemäß das Wiederfinden einer bereits aufgerufenen Internetseite eines Informationsanbieters beim Surfen durch Internetseiten des Informationsanbieters in einfacher Weise zu ermöglichen, registriert im Falle des vorliegenden Ausführungsbeispiels eine auf dem Server 20 laufende Registrierungssoftware jeden Benutzer, welcher die Homepage 50 des Informationsanbieters aufruft. Diese Registrierung erfolgt anhand eines sogenannten Cookies.

Unter einem Cookie wird dabei ein Informationspaket verstanden, das von einem Server beim Aufrufen einer auf dem Server gespeicherten Web-Seite an einen auf einem Klienten-Rechner laufenden Browser zum Speichern auf dem Klienten-Rechner mitgeliefert wird. Mit jedem Zugreifen von vorgenanntem Klienten-Rechner auf die Web-Seite kann der Browser das gespeicherte Cookie an den Server ausliefern. Dabei können Cookies nahezu beliebige Informationen enthalten. Mit der Cookie-Technik sind unter anderem statistische Daten über einen Klienten-Rechner erfassbar. Erhält eine Web-Seite das von ihr zu einem früheren Zeitpunkt gesetzte Cookie zurück, so besteht der Informationsgewinn beispielsweise in einer Wiedererkennung des Klienten-Rechners. Des weiteren ist mittels der Cookie-Technik erkennbar, ob und wie ein bestimmter Klienten-Rechner bestimmte Web-Seiten erneut aufsucht und/oder in welcher Abfolge. Hieraus sind unter anderem Erkenntnisse für Marketing-Maßnahmen gewinnbar. Da lediglich der Klienten-Rechner identifiziert wird, bleibt der Benutzer zunächst anonym. Erst wenn der Benutzer selbst der Web-Seite persönliche Daten, beispielsweise in Form einer Email-Adresse, einer Kunden- und/oder Kreditkartennummer mitteilt, sind diese persönlichen Daten auch in Cookies dieser Web-Seite einbaubar. Dies hat zur Konsequenz, dass der Benutzer beim nächsten Aufrufen vorgenannter Web-Seite sich automatisch auch mit seinen persönlichen Daten vorstellt und hierüber identifizierbar ist.

Über das Cookie kann die auf dem Server 20 laufende Registrierungssoftware also den Rechner 1 und somit indirekt den Benutzer 5 beim Aufruf der Homepage 50 des Informationsanbieters registrieren. Anschließend werden alle von dem Benutzer 5 bzw. von dessen Rechner 1 aus aufgerufenen Internetseiten des Informationsanbieters bzw. deren Adressen registriert. Auf diese Weise kann mittels der Registrierungssoftware die Abfolge der von dem Benutzer 5 aufgerufenen Internetseiten des Informationsanbieters ermittelt und in einer Darstellung grafisch veranschaulicht werden. Im Falle des vorliegenden Ausführungsbeispiels kann der Benutzer 5, wenn er beispielsweise nach längerem Surfen in Internetseiten des Informationsanbieters eine von ihm bereits aufgerufene und inzwischen verlassene Internetseite des Informationsanbieters wiederfinden möchte, mit der Computermouse 4 einen im Falle des vorliegenden Ausführungsbeispiels auf jeder Internetseite des Informationsanbieters vorhandenen Button "Lageplan" 60 aktivieren, worauf auf der Anzeigevorrichtung 2 des Benutzers 5 ein Fenster geöffnet wird, in dem dem Benutzer 5 eine Darstellung gezeigt wird, aus der die Abfolge der von dem Benutzer 5 aufgerufenen Internetseiten des Informationsanbieters erkennbar ist.

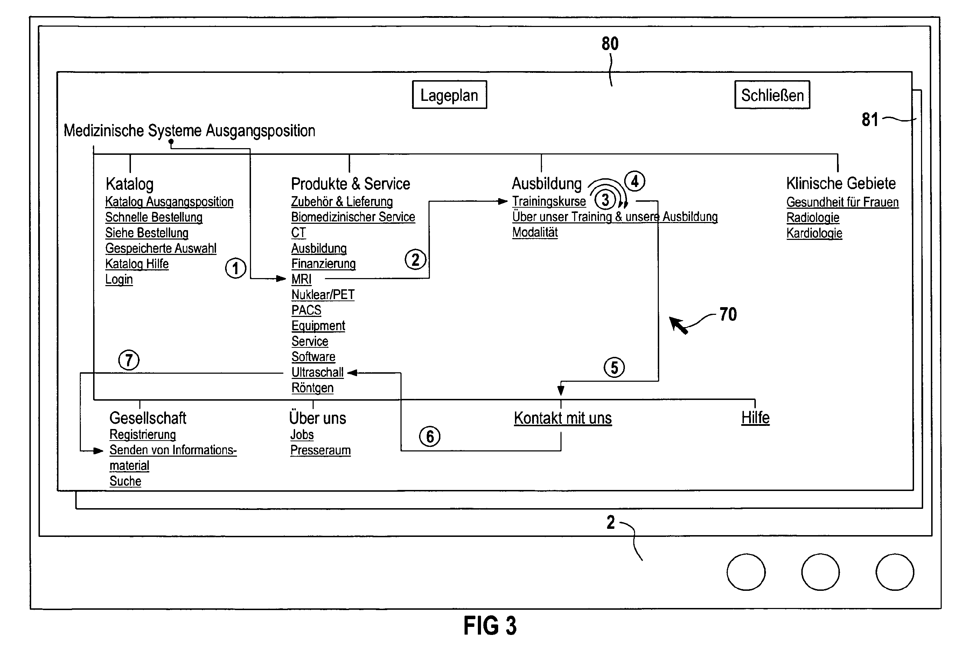

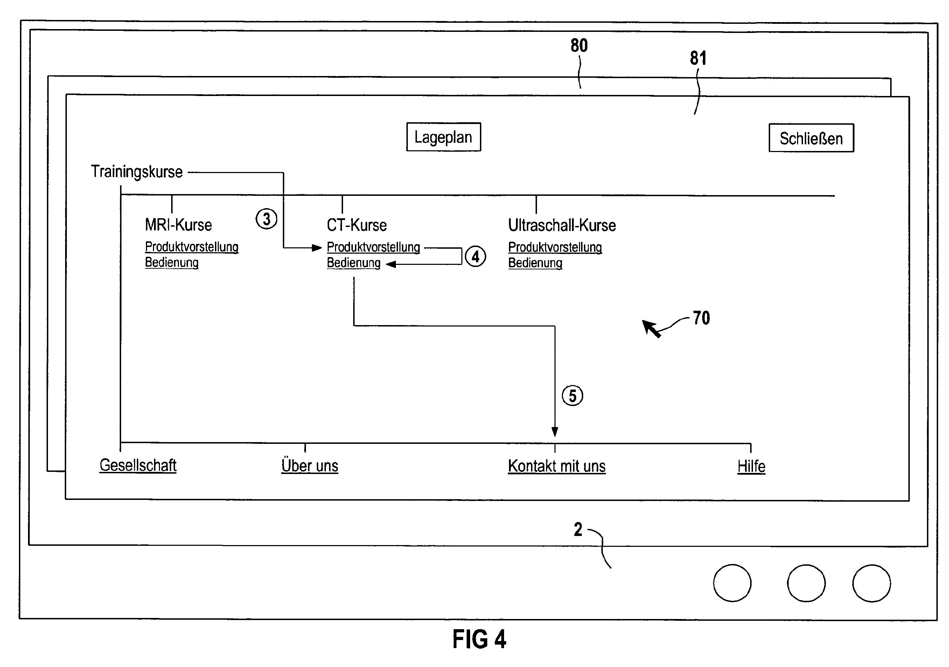

Die Figuren 3 und 4 zeigen eine derartige Darstellung, welche im Falle des vorliegenden Ausführungsbeispiels zwei Ebenen, also zwei Fenster 80 und 81 umfasst. Die Darstellung setzt vorliegenden auf die Homepage 50 bzw. auf eine nicht explizit gezeigte Verzweigungsseite des Informationsanbieters auf und ist nahezu ein Abbild der Homepage 50 bzw. der Verzweigungsseite. In den Fenstern 80 und 81 ist mit Pfeilen grafisch die Abfolge der von dem Benutzer 5 aufgerufenen Internetseiten des Informationsanbieters zu erkennen. Die Abfolge ist im Falle des vorliegenden Ausführungsbeispiels zusätzlich durch Zahlen gekennzeichnet, was nicht notwendigerweise der Fall sein muss. Vielmehr kann die Abfolge auch nur durch Zahlen oder nur durch Pfeile oder anderweitige grafische Kenntlichmachung gekennzeichnet sein. Im Falle des vorliegenden Ausführungsbeispiels handelt es sich bei den in der Darstellung gezeigten Worten jeweils um einen Link, der aktiviert werden kann, so dass der Benutzer sofort zu der von ihm gesuchten Internetseite gelangen kann. In der Darstellung der Abfolge der aufgerufenen Internetseite werden dabei nur Klartextbezeichnungen und keine Internetadressen verwendet, so dass der Benutzer anhand des Wortes bereits auf den Inhalt der Internetseite schließen kann, welche sich hinter dem mit dem Wort gekennzeichneten Link verbirgt.

Aus den Fenster 80 ist exemplarisch anhand der dem Link "Trainingskurse" zugeordneten Pfeile der Schritte 3 und 4 zu erkennen, dass sich hinter dem Link "Trainingskurse" eine Internetseite verbirgt, welche weitere Alternativen von aufrufbaren Internetseiten bietet, also eine Verzweigungsseite ist, von der aus der Benutzer 5 während des Surfens durch Aktivieren von Links zu weiteren Internetseiten gelangt ist. Im Falle des vorliegenden Ausführungsbeispiels hat der Benutzer 5, wie aus dem Fenster 80 zu erkennen ist, im Schritt 2 die Internetseite "Trainingskurse" aufgerufen und ausgehend von dieser Internetseite in den Schritten 3 und 4 weitere von dieser Internetseite abzweigende Internetseiten aufgerufen. Bewegt der Benutzer den Pfeil 70 auf das Fenster 81 und aktiviert das Fenster durch Betätigen einer Taste der Computermouse 4, so schiebt sich das Fenster 81 vor das Fenster 80. Der Benutzer ist demnach in die zweite Ebene der Darstellung gelangt, welche auf die Internetseite "Trainingskurse" aufsetzt, in der die Abfolge (Schritte 3 und 4) der von dem Benutzer 5 aufgerufenen, von der Verzweigungsseite verzweigenden Internetseiten erkennbar ist.

Der Benutzer 5 kann also durch Betätigen des Buttons "Lageplan" 60 eine gegebenenfalls mehrere Ebenen in Form von Fenstern aufweisende Darstellung aufrufen, anhand der er seinen Weg durch aufgerufene Internetseiten eines Informationsanbieters problemlos nachverfolgen kann, um eine bereits aufgerufene Internetseite zu identifizieren und diese gezielt nochmals aufrufen zu können.

Durch Aktivierung des Buttons "Schließen", welcher sowohl in dem Fenster 80 als auch in dem Fenster 81 angezeigt wird, kann der Benutzer 5 den Lageplan wieder verlassen.

Vorzugsweise wird die Darstellungen nur temporär erzeugt, d.h. es handelt sich bei der Darstellung bzw. deren Inhalt um eine Art temporär erzeugte Bookmarks, welche, nachdem der Benutzer seine Internetsitzung bei dem Informationsanbieter beendet hat, gelöscht wird.

Vorstehend wurde die Erfindung für eine Kommunikation über das Internet beschrieben. Die Erfindung kann aber auch für eine Kommunikation innerhalb eines beispielsweise firmeninternen Intranets oder eines Extranets, worunter ein Zusammenschluss wenigstens zweier Intranets verstanden wird, angewendet werden. Für das Bezugszeichen 10 kann also auch ein Intranet oder ein Extranet stehen. Der beschriebene Datentransfer sowie die beschriebene Erzeugung der Darstellung bleiben davon unberührt.

## Patentansprüche

1. Verfahren zur Erzeugung einer Darstellung für das Wiederfinden einer bereits von einer Startseite (50) eines Informationsanbieters aus aufgerufenen und inzwischen verlassenen Informationsseite, welche über das Internet, ein Intranet oder ein Extranet aufrufbar ist, aufweisend folgende Verfahrensschritte:
a) Registrieren eines Benutzers (5) bei Aufruf der Startseite (50),
b) Registrieren der von dem Benutzer (5) unmittelbar und mittelbar von der Startseite (50) aus aufgerufenen Informationsseiten des Informationsanbieters und
c) Erzeugung einer anzeigbaren Darstellung (80, 81), aus der die Abfolge der von dem Benutzer (5) aufgerufenen Informationsseiten des Informationsanbieters erkennbar ist.

2. Verfahren nach Anspruch 1 oder 2, bei dem die Darstellung (80, 81) wenigstens im Wesentlichen auf Inhalte der Startseite (50) aufsetzt, wobei in der Darstellung die Abfolge der aufgerufenen Informationsseiten grafisch gekennzeichnet ist.

3. Verfahren nach Anspruch 1 oder 2, bei dem die Abfolge der aufgerufenen Informationsseiten durch Pfeile gekennzeichnet ist.

4. Verfahren nach Anspruch 1 bis 3, bei dem die Abfolge der aufgerufenen Informationsseiten durch Zahlen gekennzeichnet ist.

5. Verfahren nach einem der Ansprüche 1 bis 4, bei dem die Darstellung (80, 81) temporär erzeugt wird.

6. Verfahren nach einem der Ansprüche 1 bis 5, bei dem die Darstellung (80, 81) Beschreibungen des Inhalts der aufgerufenen Informationsseiten im Klartext aufweist.

7. Verfahren nach einem der Ansprüche 1 bis 6, bei dem die Darstellung wenigstens zwei anzeigbare Ebenen (80, 81) umfasst, wobei die erste Ebene (80) der Darstellung auf die Startseite (50) aufsetzt und wobei die zweite Ebene (81) der Darstellung auf eine von der Startseite (50) aus aufrufbare, ebenfalls wenigstens eine aufrufbare Informationsseite bietende Verzweigungsseite aufsetzt, wobei in der ersten Ebene (80) die Verzweigung in die zweite Ebene (81) erkennbar ist.
